# EUROPEAN PATENT APPLICATION

(11) **EP 1 667 259 A1**
(43) Date of publication of application: **07.06.2006**
(21) Application number: 04771278.1
(22) Date of filing: 05.08.2004
(51) Int. Cl.: H01M 4/58

(54) **NONAQUEOUS ELECTROLYTE SECONDARY CELL, CARBON MATERIAL FOR USE THEREIN AND PRECURSOR OF SAID CARBON MATERIAL**

(30) Priority: 09.09.2003 JP 2003316751; 09.03.2004 JP 2004065411
(71) Applicant: JAPAN ENERGY CORPORATION, Tokyo 105-0001 (JP)
(72) Inventor: KOBAYASHI, Makoto; c/o Japan Energy Corporation, Toda-shi, Saitama 335-0026 (JP); TAJIMA, Ryoichi; c/o Japan Energy Corporation, Toda-shi, Saitama 335-0026 (JP)
(74) Representative: Forstmeyer, Dietmar
(86) International application number: PCT/JP2004/011251
(87) International publication number: WO 2005/027242

(57) **Abstract**

According to the present invention, a nonaqueous electrolyte secondary battery prepared from a carbon material obtained from inexpensive petroleum heavy oil, having a high capacity, and excelling in high-temperature cyclability, the carbon material, and a precursor for the carbon material can be provided. The precursor for the carbon material is obtained from certain petroleum heavy oil by holding the petroleum heavy oil under a pressure of 2.0 MPa or less at a temperature of 400-600°C for three hours or more. The carbon material is treating the precursor with heat at 800-1,500°C. The nonaqueous electrolyte secondary battery is obtained by using, as a negative electrode active material, a carbon material obtained by further oxidizing said carbon material at 200-1,000°C in nitrogen, argon, or a mixture thereof containing an oxidizing gas, or in the atmospheric air.

## Description

### TECHNICAL FIELD

The present invention relates to a nonaqueous electrolyte secondary battery, a carbon material for use therein, and a precursor of the carbon material.

### BACKGROUND ART

In recent years, the nonaqueous electrolyte secondary battery represented by a lithium-ion secondary battery with a high energy density and high power density attracts attention as a power supply for the movable bodies or as electric power storage. Usually, this lithium-ion secondary battery mainly comprises a lithium-containing complex oxide as a substance used for a positive electrode, a carbon material as a substance used for a negative electrode, and various carbonate-type solvents which contain a lithium salt as a substance used for electrolytes.

As examples of the carbon material used for a negative electrode, graphite materials such as natural graphite, graphite made from mesocarbon microbeads as a carbon source, graphite fiber made from pitch-based carbon fiber or a vapor-grown carbon fiber, low-temperature baked carbon from non-graphitizing carbon or graphitizing carbon, and the like can be given. Among these, graphite materials having a high capacity and a flat discharge potential are mainly used as a negative electrode active material of the lithium-ion secondary battery used in portable devices.

When a lithium-ion secondary battery is used as a power supply for movable bodies or as electric power storage, the unit cell requires a capacity of several tens Ah or more. A material that can provide a higher capacity is required for a negative electrode active material. From the viewpoint of the capability of detecting capacity changes of the unit cell, a discharge potential inclination to the negative electrode capacity is preferably large to some extent as being different from a graphite material. Furthermore, the secondary battery particularly for use in movable bodies are demanded to respond to a high power due to the necessity of regenerative charge and the like. In addition, as for a cycle life, thousands of or more cycles are required. Moreover, since a unit cell is enlarged, a cell temperature increases due to Joule heat during charge and discharge. For these reasons, lithium secondary batteries for movable bodies or electric power storage are demanded to possess a high energy density, high power density, and particularly excellent high temperature cyclability.

In order to respond to these demands, a low-temperature baked carbon made from petroleum, coal, ethylene reactor residue, and the like, particularly graphitizing carbon with a large inclination of discharge potential in a large range of capacity change is expected as an optimal negative electrode active material.

Among these raw materials, petroleum heavy oils are available at a low cost in a large quantity, and needle coke with a graphene layer structure (hereinafter referred to from time to time simply as "graphene structure") in which hexagonal carbon nets (graphene) expand infinitely and are stacked by the van der Waals force during heat treatment in a delayed coker or the like can be beneficially produced at a low cost in a large quantity. However, secondary batteries using a carbon material obtained from conventional petroleum-based needle coke as a negative electrode active material did not necessarily have a sufficient capacity. In addition, a carbon material with excellent high-temperature cyclability has not been discovered. For these reasons, petroleum-based needle coke could not be used as a negative electrode active material for lithium-ion secondary batteries.

### DISCLOSURE OF THE INVENTION

### PROBLEMS TO BE SOLVED BY THE INVENTION

An object of the present invention is to stably provide a nonaqueous electrolyte secondary battery having a large capacity, particularly a lithium-ion secondary battery excelling in cyclability at a high temperature of 45-60°C, for example, while using an inexpensive carbon material obtained from petroleum heavy oil as a negative electrode active material of the nonaqueous electrolyte secondary battery. Another object of the present invention is to provide a carbon material used as a negative electrode active material of the nonaqueous electrolyte secondary battery or the lithium-ion secondary battery, and a precursor of the carbon material.

### MEANS FOR SOLVING THE PROBLEMS

As a result of detailed studies on the effects that types of petroleum heavy oil, heat treatment conditions, and the like adopted in the production of a carbon material exert on the characteristics of a secondary battery using the carbon material as a negative electrode active material, the inventors of the present invention have found that the characteristics depend on the type of petroleum heavy oil and the heat treatment conditions under which the carbon material is produced and that a large capacity can be obtained when atmospheric residual oil and/or fluid catalytic cracking residual oil are used as a raw material and treated under a certain heat treatment conditions. The present invention has been accomplished based on these findings.

Specifically, the present invention provides a carbon material for secondary batteries obtained by holding raw oil containing atmospheric residual oil and/or fluid catalytic cracking residual oil as main components under a pressure of 2.0 MPa or less at a temperature of 400-600°C for three hours or more to produce a precursor of the carbon material and treating the precursor with heat at 800-1,500°C.

The present inventors have further conducted systematic studies on various oxidation treatment methods of low-temperature baked carbon used as a negative electrode active material of a lithium secondary battery. As result of measuring the interface resistances by an AC impedance method after charge and discharge of the negative electrode produced by the oxidation treatment methods, the present inventors have found that the oxidation treatment products have a reduced interface resistance of active materials as compared with untreated materials and that when an oxidizing gas is used as an oxidizer in a gaseous phase, the treated products exhibit a further reduced interface resistance of active material as compared with untreated materials.
The present inventors have examined the cyclability at 45°C using a two-electrode coin cell in which lithium cobaltate is used as the positive electrode and found that the oxidation treatment significantly affects the cyclability and that an oxidation treatment product obtained by using an oxidizing gas is excellent in the cyclability as compared with an untreated product.

The present invention has been completed on the basis of this finding. Specifically, the carbon material used as a negative electrode active material for lithium secondary batteries of the present invention is preferably treated with an oxidizing gas after the heat treatment of the above-mentioned precursor at 800-1500°C. Said oxidizing treatment is preferably carried out on a carbon material milled prior to and/or after the heat-treatment step in the production of the carbon material at 200-1,000°C in nitrogen, argon, or a mixture of these containing an oxidizing gas, or in the atmosphere.

Usually, carbon materials such as petroleum coke have oxygen-containing functional groups such as a carbonyl group or hydroxyl group formed on the surface by the oxidation treatment. The formed functional groups bond with and strengthen macromolecular compounds (macromolecular solid surface) which are reaction products of the electrolyte solvent produced on the surface of the negative electrode active material during electric charge and discharge. On the other hand, such formed functional groups are said to be highly resistive and increase the interface resistance. The increase in the interface resistance inhibits the flow of electrons in the negative electrode, which is presumed to increase cycle degradation as a result. However, in the present invention, the oxidation treatment products, particularly the products treated with an oxidizing gas, exhibit decreased interface resistance as compared with untreated products. Therefore, no functional groups are produced on the surface, but surface resistance components on the surface disappear to cause carbon to appear on the surface in the present invention. As a result, the electron flow in the negative electrode is improved as compared with that in the untreated products, which is thought to increase the cyclability.

The present invention relates to a nonaqueous electrolyte secondary battery in which the above-described carbon material is used as a negative electrode active material.
The present invention further provides a precursor of the carbon material for secondary batteries obtained by holding a raw oil containing atmospheric residual oil and/or fluid catalytic cracking residual oil as main components under a pressure of 2.0 MPa or less at a temperature of 400-600°C for three hours.

### EFFECTS OF THE INVENTION

Since a carbon material obtained from specific petroleum heavy oil is used as the negative electrode material in the present invention, the nonaqueous electrolyte secondary battery with a high capacity, the carbon material used for the nonaqueous electrolyte secondary battery, and its precursor can be provided at a low price.
In addition, the carbon material of the present invention processed by oxidation treatment is optimal as a negative electrode active material for lithium secondary batteries excelling in high temperature cyclability and contributes to improvement of performance of lithium secondary batteries used for movable bodies or as electric power storage.

### BEST MODE FOR CARRYING OUT THE PRESENT INVENTION

In the present invention, atmospheric residual oil and/or fluid catalytic cracking residual oil are used as raw materials. Hydrodesulfurization products of these residual oils are preferably used. The atmospheric residual oil is a residue obtained by distilling crude oil under atmospheric pressure. The hydrodesulfurization product of the atmospheric residual oil is a residual fraction obtained by direct hydrodesulfurization of the atmospheric residual oil. The fluid catalytic cracking residual oil usually indicates slurry oil or decanted oil obtained as byproducts from a fluid catalytic cracking unit for producing gasoline fractions and gas oil fractions, in which heavy gas oil, vacuum gas oil, or atmospheric residual oil is caused to come contact with and decomposed by a fluidized powdery zeolite catalyst at 430-550°C.
As the hydrodesulfurization product of the fluid catalytic cracking residual oil, desulfurization oil obtained by processing the above slurry oil or decanted oil in a hydrodesulfurization unit can be given. In addition, raw oils hydrodesulfurized, such as slurry oil or decanted oil obtained by processing indirect-desulfurized distillates or direct-desulfurized distillates or the like, for example using a fluid catalytic cracking unit, are also included in the hydrodesulfurized product of the fluid catalytic cracking residual oil.

Furthermore, when a mixture of atmospheric residual oil and/or its hydrodesulfurized oil and fluid catalytic cracking residual oil and/or its hydrodesulfurized oil is used, the blending ratio of the atmospheric residual oil and/or its hydrodesulfurized oil is preferably 60 vol% or less to ensure production of a stable graphene layer structure. The mix proportion of the atmospheric residual oil and/or its hydrodesulfurized oil of 40 vol% or less is more preferable.
The raw oil obtained by blending in the above ratio preferably has properties of an aromatic hydrocarbon component of 40-95 wt%, resin content of 0.2-25 wt%, and carbon residue of 0.1-10 wt%, more preferably an aromatic hydrocarbon component of 45-95 wt%, resin content of 0.5-20 wt%, and carbon residue of 0.2-8 wt%, and still more preferably an aromatic hydrocarbon component of 50-90 wt%, resin content of 1.0-15 wt%, and carbon residue of 0.5-5 wt%.
Although vacuum residual oil is also a common raw material for a coking process in the petroleum refining field, in the present invention a desired carbon material for secondary batteries or its precursor cannot be obtained from the vacuum residual oil or its hydrodesulfurized oil.

In order to obtain the precursor of carbon material, the raw oil is held under a pressure of 2.0 MPa or less at a temperature of 400-600°C for three hours or more, during which the raw oil is thermally cracked to produce coke which is the precursor of the carbon material for secondary batteries together with gas and light oils such as cracked naphtha, cracked gas oil, and the like. If the process conditions are outside the range of the above-mentioned pressure, temperature, and retention time, the carbon material with a stable graphene layer structure cannot be obtained. More preferable conditions are a pressure of 0.4-1.0 MPa, temperature of 420-550°C, and reaction time of 20 hours or more.

Various production apparatuses can be used to produce the precursor of the carbon material. As a said apparatus a tube bomb is used on a laboratory level, a delayed coker is used to stably produce a large amount of coke, and a bench reactor of the delayed coker is used for the production in an intermediate scale.
A tube bomb, which is a common apparatus used in the production of needle coke on a laboratory level, produces cracked gas, cracked oil, and comparatively high quality coke (the precursor of carbon material) from heavy oil. For example, a heavy oil thermal cracking apparatus described in Mochida et al., Chemistry and Physics of Carbon, 24, 111 (1994) can be given. This is an experimental device comprising an iron can to fill the raw oil therein, equipped with a gas discharge line on the top. The can is inserted into a heated sand bath and held therein to produce coke. In this tube bomb, the reaction pressure can be arbitrarily set up and maintained constant by a pressure gauge and control valve on the gas discharge line. The reaction temperature which is a preset temperature of the sand bath and the reaction time which is the time from insertion to withdrawal of the can into or from the sand bath can also be arbitrarily set up.
The characteristics of the produced coke delicately differ depending on the reaction time (retention time). In the present invention, a product that has been thermally treated for three hours or more is used as the carbon material precursor.

The delayed coker is a thermal cracking unit of heavy oil, and produces cracked gas, cracked oil, and comparatively high quality coke (the precursor of carbon material of the present invention). The raw oil is continuously fed to a furnace, rapidly heated in a short time, and supplied to the bottom of a coke drum. In the insulated coke drum carbonization proceeds under the conditions of appropriate temperature and pressure. Coke produced from the liquid phase is accumulated in the drum. The cracked product (gas and cracked oil) is discharged from the top of the drum and fed to a fractionating column where the product is distillated. The heavy oil discharged from the column bottom is recycled to the furnace together with a fresh feed and the above heat treatment is repeated. Usually, two drums are provided. When one drum is filled with coke, the raw oil is fed to the other empty drum. The drum filled with coke is separated and cooled, whereupon accumulated coke is cut using high pressure water and the like to take out.

Since the coke (carbon material precursor) in the coke drum is accumulated toward the top from the bottom of the drum, the time (retention time) in which the coke in the lower part receive heat history differs from the time in which the coke in the upper part receive heat history, giving rise to delicate difference in the characteristics between the lower part coke and the upper part coke. For this reason, coke that has been thermally treated for three hours or more is used as the carbon material precursor in the present invention. The carbon material precursor which has received the heat history of three hours or more can be specified by the amount of the coke accumulated in the coke drum (the height of the coke from the bottom) and the time required for the coke to reach that amount. Specifically, after the coke drum has been filled with coke, the coke accumulated in the drum during the last three hours before termination of supply of the raw oil is removed, and then the remaining coke is cut out from the drum for use as the carbon material precursor.
The coke (carbon material precursor) obtained in this manner using a tube bomb or a delayed coker preferably has properties of a volatile component content of 2-20 wt% and hydrogen content on a dry base of 1-6 wt%.

The resulting precursor is treated with heat at 800-1,500°C for several tens minutes to several hours in a baking kiln such as a special atmospheric kiln, shuttle kiln, or rotary kiln to obtain the carbon material for the secondary batteries of the present invention. The resulting carbon material preferably has properties of a volatile component content of 2 wt% or less and a crystal diameter in the c axis direction of 5-50A. The heat treatment temperature of less than 800°C is undesirable because of a decreased efficiency in the lithium occlusion-evolution reaction due to the fine graphene layer structure. Although the graphene layer structure develops at a temperature of more than 1,500°C, such a high heat treatment temperature accompany a decrease of lithium ion occlusion sites such as lattice defects, resulting in a tendency of a capacity unpreferably decrease when the product is used as a secondary battery.
A more preferable temperature range is 800-1,300°C.

It is preferable that the carbon material obtained in this manner is milled before and/or after the heat treatment in the production process and further carried out on oxidation treatment by a known method. The oxidation treatment is preferably carried out by heating in an oxidizing gas atmosphere. In the oxidation treatment, the condition of the oxidizing gas atmosphere is adjusted to include an oxidizing gas in an inert gas atmosphere of nitrogen, argon, or an inert mixture thereof. As the oxidizing gas, gases exhibiting an oxidizing action such as oxygen, ozone, nitrogen oxide, carbon dioxide, and steam can be used. The concentration of the oxidizing gas is preferably 3 vol% or more. If the concentration is less than 3 vol%, the oxidation reaction on the surface of the carbon material powder does not sufficiently proceed.
The oxidizing gas atmosphere can be produce by adding an appropriate amount of oxidizing gas such as oxygen, ozone, or carbon dioxide to an inert gas such as nitrogen, argon or the like so as to obtain a desired oxidizing gas concentration. Taking into consideration the cost and an environmental effect, the atmospheric air (air) can be used as a substitute for an inert gas such as nitrogen gas or an oxidizing gas such as oxygen gas, or as the oxidizing gas atmosphere itself.
The temperature for the oxidizing treatment is preferably 200-1,000°C. If less than 200°C, the oxidation reaction of the carbon material powder surface does not sufficiently proceed; if more than 1,000°C, the specific surface area of the carbon material powder increases excessively, adversely affecting characteristics of the battery, unpreferably.

The carbon material obtained in this manner can be used for a nonaqueous electrolyte secondary battery as a negative electrode active material by appropriately combining with a known positive electrode active material containing an oxide of lithium-containing complex and a nonaqueous electrolyte. There are no specific limitations to the nonaqueous electrolyte or the positive electrode active material inasmuch as these are commonly used materials for a lithium secondary battery.
The negative electrode can be fabricated by a known method. For example, the negative electrode can be produced by mixing the powder obtained by grinding the above carbon material with a binder, adding a solvent to the mixture to obtain a slurry or paste, applying the slurry or paste to the surface of a collector such as a copper foil, drying the coating, and, if necessary, compression forming the resulting object to increase the electrode density.

As a result of detailed investigation into the electrochemical behavior of the lithium ion secondary batteries using the carbon material thus obtained, that is, the carbon material baked at a low temperature, as a negative electrode active material, dependency of the capacity upon the type of petroleum heavy oil and the heat treatment conditions is supposed to be the effect of dispersion of lithium ions into the core of the layer structure based on the graphene structure of the carbon material obtained by low-temperature baking. The graphitizing carbon produced from petroleum heavy oil as a raw material has a smaller number of lithium ion occlusion sites, but higher orientation of graphene layer structure than graphitizing carbon produced from coal or non-graphitizaing carbon produced by thermal cracking of a carbon source material together with oxidizing agent such as nitric acid. For this reason, it is presumed that lithium ions easily diffuse from the carbon surface to the core of negative electrode active material, enabling the material to occlude lithium ions in the occlusion sites for lithium ions faster than other materials. As a result, it is unnecessary to continue charge at a constant voltage to fully charge the negative electrode after the potential of the negative electrode has reduced to the reduction potential of lithium as in the case of the non-graphitizing carbon. The negative electrode is fully charged when lithium ions are occluded according to a decrease of the negative electrode electric potential to reach the reduction potential of lithium. Formation of the graphene layer structure ensuring such easy diffusion of lithium ions depends on the characteristics of raw material, such as C/H ratio of petroleum heavy oil and polymerization degree, and the thermal treatment conditions.

### EXAMPLES

The present invention is described below in more detail by examples. However, the present invention is not limited to the following examples.

### Example 1

A 60:40 mixture of atmospheric residual oil and fluid catalytic cracking residual oil was used as raw oil, and held in a tube bomb under a pressure of about 0.5 MPa at a temperature of about 500°C for 40 hours to obtain a precursor of carbon material. The precursor was heated in a shuttle kiln at a heating rate of 0.6°C per minute for 16 hours, then at a heating rate of 1.0°C per minute up to the temperature in the kiln of 900°C, held at 900°C for one hour, and allowed to cool to room temperature, thereby obtaining a carbon material. The carbon material was milled using a jet mill and classified using an air classifier to obtain carbon material powder.

A negative electrode was prepared by the following method. 0.3 g of polyvinylidene fluoride powder was dissolved in 2.7 cc of N-methyl-2-pyrrolidone, 3.0 g of the above carbon material powder was added to the solution and mixed to obtain a slurry, the slurry was applied to a copper foil and dried (a coating amount of 10 mg/cm² and a thickness of 100 µm on a dry film basis) and the resulting material was punched into a disk with a diameter of 12.5 mm, which was pressed for 10 seconds at 1 T/cm² to obtain a negative electrode.

The charge and discharge characteristics of the negative electrode thus obtained were evaluated using lithium metal as a counter electrode and a reference electrode and 1M LiClO₄ solution in 1:1 mixture of ethylene carbonate (EC) and dimethyl carbonate (DMC) as an electrolyte. Charge and discharge conditions of a constant current of 1 mA/cm² up to a potential of 0 V (charge) and 1.5 V (discharge) were adopted, respectively. The results are shown in Table 1.

### Example 2

Carbon material powder was obtained, negative electrode was prepared using the powder, and the charge and discharge characteristics was evaluated in a same manner as in Example 1, except for using a 30:70 mixture of atmospheric residual oil and fluid catalytic cracking residual oil as raw oil. The results are shown in Table 1.

### Example 3

Carbon material powder was obtained, negative electrode was prepared using the powder, and the charge and discharge characteristics was evaluated in a same manner as in Example 1, except for using fluid catalytic cracking residual oil as raw oil. The results are shown in Table 1.

### Example 4

Carbon material powder was obtained, negative electrode was prepared using the powder, and the charge and discharge characteristics was evaluated in a same manner as in Example 1, except for using a 20:80 mixture of atmospheric residual oil and fluid catalytic cracking residual oil as raw oil, holding the raw oil for 60 hours to obtain the precursor, and treating the precursor with heat at 1,100°C. The results are shown in Table 1.

### Example 5

Carbon material powder was obtained, negative electrode was prepared using the powder, and the charge and discharge characteristics was evaluated in a same manner as in Example 1, except for using a 40:60 mixture of atmospheric residual oil and fluid catalytic cracking residual oil as raw oil, holding the raw oil for 20 hours to obtain the precursor, and treating the precursor with heat at 800°C. The results are shown in Table 1.

**TABLE 1**

| | Raw Oil Mixing ratio*¹ (Vol%) | | | Retention Time*² (hr) | Heat treatment Temperature*³ (°C) | Charge Capacity (mAh/g) | Discharge Capacity (mAh/g) |
|---|---|---|---|---|---|---|---|
| | A | B | C | | | | |
| Example 1 | 60 | 40 | 0 | 40 | 900 | 350 | 258 |
| Example 2 | 30 | 70 | 0 | 40 | 900 | 343 | 259 |
| Example 3 | 0 | 100 | 0 | 40 | 900 | 345 | 268 |
| Example 4 | 20 | 80 | 0 | 60 | 1100 | 310 | 251 |
| Example 5 | 40 | 60 | 0 | 20 | 800 | 410 | 280 |
| Comparative Example 1 | 0 | 0 | 100 | 30 | 900 | 350 | 234 |
| Comparative Example2 | (Tar:100%) | | | 30 | 900 | 320 | 229 |
| Comparative Example 3 | 30 | 70 | 0 | 30 | 1550 | 240 | 195 |
| Comparative Example 4 | 30 | 70 | 0 | 2 | 900 | 319 | 237 |

| | | | | | | | |
|---|---|---|---|---|---|---|---|
| *1 A: Atmospheric residual oil | | | | | | | |
| B: Fluid catalytic cracking residual oil | | | | | | | |
| C: Vacuum residual oil | | | | | | | |
| *2 Holding time for obtaining carbon material precursor | | | | | | | |
| *3 Heat treatment temperature of carbon material precursor | | | | | | | |

### Comparative Example 1

Vacuum residual oil (including its hydrodesulfurized oil) used as raw oil was held in a tube bomb under a pressure of about 0.5 MPa at a temperature of about 500°C for 30 hours to obtain a precursor of carbon material. The precursor was heated in a shuttle kiln at a heating rate of 0.6°C per minute for 16 hours, then at a heating rate of 1.0°C per minute up to the temperature in the kiln of 900°C, held at 900°C for one hour, and allowed to cool to room temperature, thereby obtaining a carbon material. The carbon material was milled using a jet mill and classified using an air classifier to obtain carbon material powder.

A negative electrode was prepared by the following method. 0.3 g of polyvinylidene fluoride powder was dissolved in 2.7 cc of N-methyl-2-pyrrolidone, 3.0 g of he above carbon material powder was added to the solution and mixed to obtain a slurry, the slurry was applied to a copper foil and dried (a coating amount of 10 mg/cm² and a thickness of 100 µm on a dry film basis) and the resulting material was punched into a disk with a diameter of 12.5 mm, which was pressed for 10 seconds at 1 T/cm² to obtain a negative electrode.

The charge and discharge characteristics of the negative electrode thus obtained were evaluated using lithium metal as a counter electrode and a reference electrode and 1M LiClO₄ solution in 1:1 mixture of EC and DMC as an electrolyte. Charge and discharge condition of a constant current of 1 mA/cm² up to a potential of 0 V (charge) and 1.5 V (discharge) were adopted, respectively. The results are shown in Table 1.

### Comparative Example 2

Carbon material powder was obtained, negative electrode was prepared using the powder, and the charge and discharge characteristics was evaluated in a same manner as in Example 1, except for using tar as raw oil. The results are shown in Table 1.

### Comparative Example 3

Carbon material powder was obtained, negative electrode was prepared using the powder, and the charge and discharge characteristics was evaluated in a same manner as in Example 1, except for using a 30:70 mixture of atmospheric residual oil and fluid catalytic cracking residual oil as raw oil, holding the raw oil for 30 hours to obtain the precursor, and treating the precursor with heat at 1,550°C. The results are shown in Table 1.

### Comparative Example 4

Carbon material powder was obtained, negative electrode was prepared using the powder, and the charge and discharge characteristics was evaluated in a same manner as in Example 1, except for using a 30:70 mixture of atmospheric residual oil and fluid catalytic cracking residual oil as raw oil and holding the raw oil for two hours to obtain the precursor. The results are shown in Table 1.

### Example 6

A 60:40 mixture of atmospheric residual oil and fluid catalytic cracking residual oil was used as raw oil and held in a tube bomb under a pressure of about 0.5 MPa at a temperature of about 500°C for 40 hours to obtain a precursor of carbon material. The precursor was milled using a jet mill and classified using an air classifier to obtain powder of carbon material precursor.
The powder of precursor was heated in a shuttle kiln at a heating rate of 0.6°C per minute for 16 hours, then at a heating rate of 1.0°C per minute up to the temperature in the kiln of 1,100°C, held at 1,100°C for one hour, and allowed to cool to room temperature, thereby obtaining carbon material powder.
The carbon material powder thus obtained was heated to 800°C at a heating rate of 200°C per hour in a stream of mixed gas of oxygen and nitrogen (oxygen content: 20 vol%, flow rate: 31/min) and oxidized at 800°C for one hour. The yield after the oxidation treatment was about 90%.

A negative electrode was prepared by the following method. 0.3 g of polyvinylidene fluoride powder was dissolved in 2.7 cc of N-methyl-2-pyrrolidone, 3.0 g of he above carbon material powder was added to the solution and mixed to obtain a slurry, the slurry was applied to a copper foil and dried (a coating amount of 10 mg/cm² and a thickness of 100 µm on a dry film basis) and the resulting material was punched into a disk with a diameter of 12.5 mm, which was pressed for 10 seconds at 1 T/cm² to obtain a negative electrode. The resulting negative electrode had a thickness of about 30 µm, electrode density of 1.2 g/cm³, and active material content of about 3 mg/cm².

A positive electrode was prepared in the same manner as the negative electrode using lithium cobaltate as a positive electrode active material and acetylene black as an electric conduction material. The resulting positive electrode had a thickness of about 35 µm, electrode density of 2.7 g/cm³, and active material content of about 8 mg/cm².

The positive and negative electrodes were impregnated with an electrolyte (EC : DMC = 1:1 1M LiPF₆), a porous polyethylene film placed between the two electrodes, and the resultant object was incorporated into a coin cell (CR2032).
The coin cell was operated one cycle at 25°C under the charge condition of about 0.3 mA and 4.2 V for 10 hours and discharge condition of about 0.3 mA and of 2.5 V, then 50 cycles at 45°C under the charge condition of about 2 mA and 4.2 V for 2 hours and discharge condition of about 2 mA and of 2.5 V. The ratio of the discharge capacity at the first cycle to the discharge capacity at 50th cycle at 45°C (cyclability at 45°C) was determined. The results are shown in Table 2.

### Example 7

The cyclability at 45°C was evaluated in the same manner as in Example 6, except that the baking temperature of the carbon material precursor powder in the shuttle kiln was 800°C. The results are shown in Table 2.

### Example 8

The carbon material powder obtained in Example 4 was heated to 800°C at a heating rate of 200°C per hour in an air stream (flow rate: 5 1/min) and oxidized at 800°C for one hour. The 45°C cyclability of the oxidized product was evaluated in the same manner as in Example 6. The results are shown in Table 2.

### Example 9

The 45°C cyclability was evaluated in the same manner as in Example 6, except that the carbon material powder was heated to 600°C at a heating rate of 200°C per hour in an air stream (flow rate: 51/min) and oxidized at 600°C for one hour. The results are shown in Table 2.

### Example 10

The carbon material precursor obtained in Example 4 was milled using a pulverizer so as to obtain particles with an average particle diameter of 35 µm. The resulting carbon material precursor powder was heated to 1,100°C at a heating rate of 200°C per hour in a nitrogen stream (flow rate: 31/min) and baked at 1,100°C for one hour. The yield after baking was 94% and aggregates were almost not observed.
The baked product was milled again (re-milling) using a jet mill so as to obtain fine particles with an average particle diameter of 19 µm and classified using an air classifier. The carbon material precursor powder was oxidized and the 45°C cyclability of the oxidized product was evaluated in a same manner as in Example 6. The results are shown in Table 2.

### Comparative Example 5

Carbon material powder was prepared, a lithium secondary battery was produced, and its cyclability was evaluated in exactly the same manner as in Example 6, excepting for omission of oxidation treatment. The results are shown in Table 2.

**TABLE 2**

| | Cyclability at 45°C (%) |
|---|---|
| Example 6 | 72 |
| Example 7 | 73 |
| Example 8 | 68 |
| Example 9 | 70 |
| Example 10 | 72 |
| Comparative Example 5 | 54 |

### INDUSTRIAL APPLICABILITY

Since a carbon material obtained from certain petroleum heavy oil is used as the negative electrode material in the present invention, a nonaqueous electrolyte secondary battery with a high capacity can be provided at a low cost. In addition, since the lithium secondary battery using said carbon material excels in high temperature cyclability, the battery can be suitably used as power supply for movable bodies or electric power storage.

## Claims

1. A carbon material for secondary battery obtained by holding raw oil containing atmospheric residual oil and/or fluid catalytic cracking residual oil as main components under a pressure of 2.0 MPa or less at a temperature of 400-600°C for three hours or more to produce a precursor of the carbon material and treating the precursor with heat at 800-1,500°C.

2. The carbon material for secondary battery according to claim 1, wherein the carbon material obtained is further subjected to an oxidizing treatment.

3. The carbon material for secondary battery according to claim 2, wherein the oxidizing treatment comprises thermally treating the carbon material at 200-1,000°C in nitrogen, argon, or a mixture thereof containing an oxidizing gas, or in the atmospheric air.

4. A nonaqueous electrolyte secondary battery using the carbon material according to any of claims 1-3 as a negative electrode active material.

5. A precursor of the carbon material for secondary battery obtained by holding raw oil containing atmospheric residual oil and/or fluid catalytic cracking residual oil as main components under a pressure of 2.0 MPa or less at a temperature of 400-600°C for three hours or more.
